# EUROPEAN PATENT APPLICATION

(11) **EP 3 961 538 A1**
(43) Date of publication of application: **02.03.2022**
(21) Application number: 20193367.8
(22) Date of filing: 28.08.2020
(51) Int. Cl.: G06Q 20/06, G06Q 20/22

(54) **METHOD AND SYSTEM FOR PROCESSING A TRANSACTION IN A BLOCKCHAIN NETWORK**

(71) Applicant: Siemens Aktiengesellschaft, 80333 München (DE)
(72) Inventor: VERMA, Divyanshu, 560100 Bangalore, Karnataka (IN); RAJ, Arun, 635110 Hosur, Tamil Nadu (IN); THIYAGARAJAN, Rajaram, 560102 Bangalore, Karnataka (IN)
(74) Representative: Patentanwaltskanzlei WILHELM & BECK

(57) **Abstract**

The present invention provides a method and system of processing a transaction in a blockchain network (100). The method comprises receiving a request to process the transaction in the blockchain network (100) based on an event associated with the blockchain network. The method comprises allocating one or more tokens belonging to one or more stakeholder nodes (102A-N) across a set of intervals in such a manner that the total number of tokens in the blockchain network (100) are distributed across the set of intervals. The method comprises determining a set of stakeholder nodes (102A-N) responsible for processing the transaction in the blockchain network (100) based on the tokens allocated to each of the intervals. The method comprises sending a notification to each of the stakeholder nodes (102A-N) responsible for processing the transaction in the blockchain network such that each of the responsible stakeholder nodes (102A-N) processes the transaction in the blockchain network.

## Description

The present invention generally relates to the field of blockchain networks, and more specifically to a method and system for processing a transaction in a blockchain network.

A blockchain network is a peer to peer network which does not require a trusted central authority or intermediaries to authenticate or to settle the transactions or to control the network infrastructure.

However, existing blockchain platforms face scalability concerns. The transaction validation and consensus mechanisms used in blockchain networks and other parameters such as block-size and block-time determine how fast the network can process and confirm the transactions. Several existing consensus mechanisms, such as Proof of Work (PoW) pose several challenges such as requirement of high computational speeds for miners and an increase in transaction time in case of long chains of distributed ledgers. Notably, blockchain networks can take from a few seconds to several minutes for a transaction to be confirmed and have less transaction throughput. Furthermore, Proof of Work (PoW) consensus algorithms may sometimes lead to centralization risks.

Another consensus algorithm, such as Proof of Stake (PoS) is aimed at reducing risk of centralization and increasing energy efficiency, over the widely adopted consensus algorithm Proof of Work (PoW) and its variants. However, Proof of Stake (PoS) suffers from its own set of limitations, most notable being the "nothing at stake" problem. In Proof of Stake (PoS), a set of validators are responsible for proposing and voting on the next block in order to complete a transaction. Herein, the weight of each vote of a validator is dependent on the size of the deposit that validator holds in the system. However, the selection of validators poses a major challenge in Proof of Stake (PoS) systems. In existing Proof of Stake (PoS) systems, a validator is selected using a pseudo random algorithm (the algorithm is not completely random as it factors in the individual stake in the system) during each time slot (e.g., time slot of 5 seconds). The random algorithm subsequently assigns the validator the right to create a single block that points to some previous block, i.e. to validate a transaction in the blockchain network. However, this highly favors the nodes with more stake in the system which can result in centralization of the decision-making process and reduced fairness and transparency in the blockchain network.

In light of the above, there exists a need for a system that processes transactions in a blockchain network in a fair and transparent manner.

Therefore, the object of the invention is to provide a system and method for processing a transaction in a blockchain network that is fair and offers a greater degree of decentralization.

The object of the present invention is achieved by a method of processing a transaction in a blockchain network.

The method comprises a step of receiving a request to process the transaction in the blockchain network based on an event associated with the blockchain network. The method comprises a step of allocating one or more tokens belonging to one or more stakeholder nodes across a set of intervals in such a manner that the total number of tokens in the blockchain network are distributed across the set of intervals. The term "token" as used herein refers to cryptographic assets that are programmable assets or access rights. The tokens may be managed by a smart contract and an underlying blockchain network. Such cryptographic assets are accessible only by the person who has the private key for that address and can only be signed using this private key. The tokens may represent physical good, a digital good, a security, a collectible, a royalty, a reward, a digital currency and so forth. These cryptographic assets or tokens may be issued with as a few lines of code, using a simple smart contract running on a blockchain network. In an embodiment, the tokens may be defined as a bundle of conditional rights assigned to the stakeholder node. Token are essentially rights management tools that can represent any existing digital or physical asset, or access right to assets someone else owns. Tokens may represent a store of value, a set of permissions in the physical, digital, and legal world. The tokens facilitate collaboration across markets and jurisdictions and allow more transparent, efficient, and fair interactions between market participants, at low costs.

Further, the term "set of intervals" as used herein refers to a collection of one or more intervals to which the total number of tokens may be assigned to. Each of the intervals comprises at least one token belonging to at least one stakeholder node. The method comprises a step of determining a set of stakeholder nodes responsible for processing the transaction in the blockchain network based on the tokens allocated to each of the intervals. The method comprises a step of sending a notification to each of the stakeholder nodes responsible for processing the transaction in the blockchain network such that each of the responsible stakeholder nodes processes the transaction in the blockchain network.

In an embodiment, the method comprises sorting the total number of tokens belonging to one or more stakeholder nodes in a predefined order.

In an embodiment, the method comprises generating the set of intervals based on the total number of tokens in the blockchain network, and wherein each interval in the set of intervals is associated with an interval size.

In an embodiment, the method of allocating one or more tokens belonging to one or more stakeholder nodes across the set of intervals comprises allocating one or more tokens belonging to one or more stakeholder nodes across a set of intervals according to the sorted total number of tokens.

In embodiment, the method of allocating one or more tokens belonging to one or more stakeholder nodes across the set of intervals comprises allocating a predefined number of tokens to each interval in the set of intervals in a sequential order starting with the stakeholder node having the highest number of tokens.

In an embodiment, the predefined number of tokens in each interval is based on the interval size of each interval in the set of intervals.

In an embodiment, the method of determining the responsible stakeholder nodes comprises selecting a token from each interval in the set of intervals.

In an embodiment, the method comprises determining whether the transaction is successfully processed by the responsible stakeholders, wherein a notification indicating the transaction is successfully processed is generated, if the transaction is successfully processed by the responsible stakeholder nodes.

The object of the invention is also achieved by a system for processing a transaction in a blockchain network. The system comprises at least one processing unit and a memory unit coupled to the at least one processing unit. The memory unit comprises a set of machine readable instructions executable by the at least one processing unit. The set of machine readable instructions cause the processing unit to perform method steps according to the aforementioned method steps.

The object of the invention is also achieved by a cloud computing system. The cloud computing system comprises a communication interface communicatively coupled to a plurality of nodes in the blockchain network. Further, the cloud computing system comprises one or more processing units communicatively coupled to the communication interface, and a memory unit communicatively coupled to the one or more processing units. The memory unit comprises a set of machine readable instructions executable by the one or more processing units. The set of machine readable instructions cause the processing unit to perform method steps according to the aforementioned method steps.

This summary is provided to introduce a selection of concepts in a simplified form that are further described below in the following description. It is not intended to identify features or essential features of the claimed subject matter. Furthermore, the claimed subject matter is not limited to implementations that solve any or all disadvantages noted in any part of this invention.

The present invention is further described hereinafter with reference to illustrated embodiments shown in the accompanying drawings, in which:
- FIG 1: is a block diagram of blockchain network for processing a transaction therein, according to an embodiment of the present invention;
- FIG 2: is a block diagram of a computing device associated with the stakeholder nodes in the blockchain network of FIG 1, according to an embodiment of the present invention;
- FIG 3: is a block diagram of a cloud computing system for processing a transaction in a blockchain network, according to an embodiment of the present invention;
- FIG 4: illustrates a process flowchart depicting a method of a processing a transaction in a blockchain network, according to an embodiment of the present invention; and
- FIG 5: is a block diagram of a diagrammatic representation exemplary token distribution in the set of intervals, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

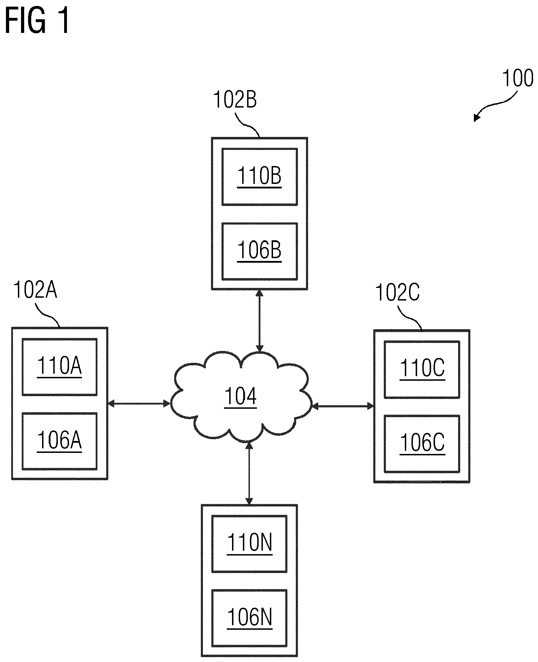

FIG 1 is a block diagram of blockchain network 100 for processing a transaction therein, according to an embodiment of the present invention. In particular, the blockchain network 100 may be provided across one or more entities over a network 104. The network 104 may involve different network communication technologies, standards and protocols, for example Global System for Mobile Communications (GSM), Code division multiple access (CDMA), wireless local loop, WMAX, Bluetooth, Long Term Evolution (LTE) and so on. The network 104 may involve different physical media such as a coaxial cable, fiber optics, transceiver stations and so on. Example network types include the Internet, Ethernet, plain old telephone service (POTS) line, public switched telephone network (PSTN), integrated services digital network (ISDN), digital subscriber line (DSL), and others, including any combination of these. The network 104 can be a local area network or wide area network.

Exemplary entities 102A-N may include participants of the blockchain network 100. The blockchain network 100 may be a permissioned network, such as an organization, a consortium, a business group and the like. Private or permissioned blockchain networks are usually controlled and operated by a single consortium and the transactions can be viewed only by the users within the organization. Consortiums can have multiple private blockchain networks where each network is dedicated to a specific use case or department or business vertical. The blockchain networks within a consortium may be created either using the same blockchain platform or technology or with different platforms or technologies. In an exemplary embodiment, the blockchain network 100 may be a networked system for conducting peer-to-peer transaction with consensus in a fair and transparent manner. Notably, the transaction may be performed in the blockchain network 100 to perform specific functions for achieving consensus regarding digital objects such as digital records, stake, asset, token, voting right over the blockchain network 100. The stakeholder nodes 102A-N may involve one or more units being provided through various computing embodiments, such as using a combination of hardware, software, and/or embedded firmware. For example, the system and its units may be implemented using servers, processors, computer-readable memory, and storage devices, etc.

The stakeholder nodes 102A-N may include one or more computing devices capable of executing one or more transactions in the blockchain network 100. If a transaction is successfully executed by one or more stakeholder nodes 102A-N, a block is added to the blockchain network 100. The one or more stakeholder nodes 102A-N may be geographically distributed. Each of the stakeholder nodes 102A-N is capable of communicating with each other using respective communication interfaces 106A-N using communication links via the Internet or the network 104. The communication links can be wired or wireless links. The one or more stakeholder nodes 102A-N may have an operating system and at least one software program 110A-N for performing desired operations in the blockchain network 100.

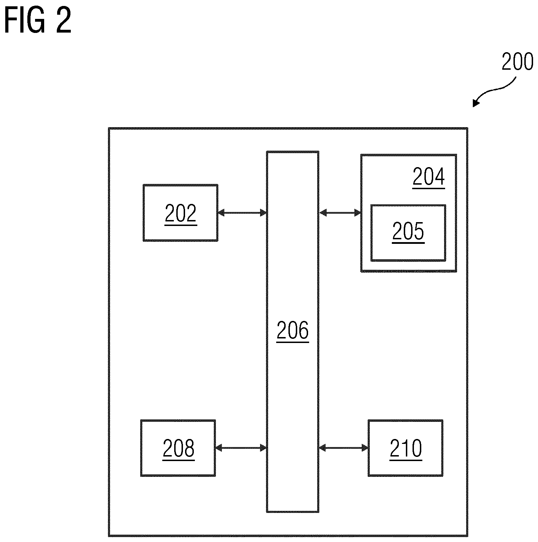

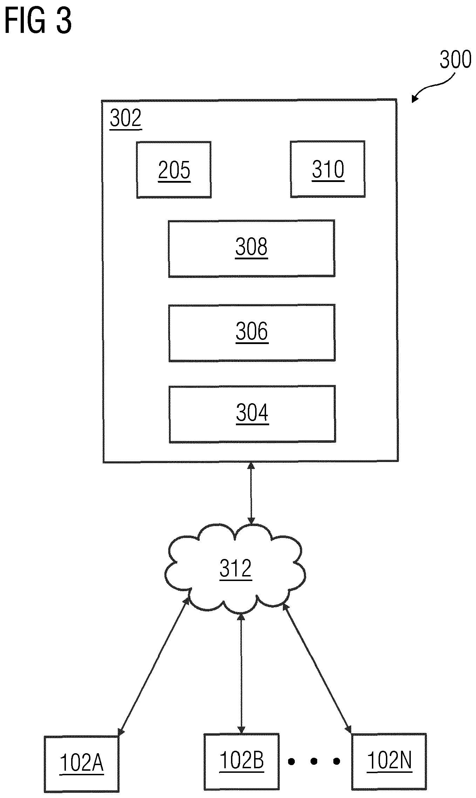

In some embodiments, the stakeholder nodes 102A-N may be implemented using one or more computing devices as described later in conjunction with FIG 2. In some embodiments, the system may be provided by distributed resources (e.g., through a "cloud computing" implementation) as described later in conjunction with FIG 3.

FIG 2 is a block diagram of a computing device 200 of any of the stakeholder nodes 102AN in the blockchain network 100, according to an embodiment of the present invention. The computing device 200 may be a personal computer, a laptop computer, a tablet, a server, a virtual machine and the like. The computing device 200 includes a processing unit 202, a memory unit 204, a bus 206, an input unit 208, and a display unit 210. The computing device 200 may be a specific purpose computer configured to participate in determining a set of stakeholder nodes responsible for processing a transaction in the blockchain network 100.

The processing unit 202 as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 202 may also include embedded controllers, such as generic or programmable logic devices or arrays, application specific integrated circuits, single-chip computers, and the like.

The memory unit 204 may be non-transitory volatile memory and/or non-volatile memory. The memory 204 may be coupled for communication with the processing unit 202, such as being a computer-readable storage medium. The processing unit 202 may execute instructions and/or code stored in the memory unit 204. A variety of computer-readable instructions may be stored in and accessed from the memory unit 204. The memory unit 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In the present embodiment, the memory unit 204 includes a validator selection module 205 stored in the form of machine-readable instructions on any of the above-mentioned storage media and may be in communication to and executed by the processing unit 202. When the machine-readable instructions are executed by the processing unit 202, the validator selection module 205 causes the processing unit 202 to receive a request to process the transaction in the blockchain network 100 based on an event associated with the blockchain network 100, allocate one or more tokens belonging to one or more stakeholders nodes 102A-N across a set of intervals in such a manner that the total number of tokens in the blockchain network 100 are distributed across the set of intervals, determine a set of stakeholder nodes responsible for processing the transaction in the blockchain network 100 based on the tokens allocated to each of the intervals, and sending a notification to each of the stakeholder nodes 102A-N responsible for processing the transaction in the blockchain network 100 such that each of the responsible stakeholder nodes 102A-N processes the transaction in the blockchain network 100.

The input unit 208 may provide ports to receive input from input devices such as keypad, touch-sensitive display, camera (such as a camera receiving gesture-based inputs), etc. capable of receiving input signals such as initiation of an event. An output unit 210 may provide ports to output data, for example, as a display unit with a graphical user interface for displaying received requests, displaying a message of selection as responsible stakeholder node 102A-N, information pertaining to events in the blockchain network 100, and so forth. The bus 206 acts as interconnect between the processing unit 202, the memory unit 204, the input unit 208, and the display unit 210.

Those of ordinary skilled in the art will appreciate that the hardware depicted in FIG 2 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition to or in place of the hardware depicted. The depicted example is provided for the purpose of explanation only and is not meant to imply architectural limitations with respect to the present invention.

The computing device 200 in accordance with an embodiment of the present disclosure includes an operating system employing a graphical user interface. The operating system permits multiple display windows to be presented in the graphical user interface simultaneously with each display window providing an interface to a different application or to a different instance of the same application. A cursor in the graphical user interface may be manipulated by a user through the pointing device. The position of the cursor may be changed and/or an event such as clicking a mouse button, generated to actuate a desired response.

FIG 3 is a block diagram of a cloud computing system 300 for processing a transaction in a blockchain network 100, according to an embodiment of the present invention. Particularly, the cloud computing system 300 comprises a cloud computing device 302 configured for processing a transaction in a blockchain network 100. The cloud computing device 302 comprises a cloud communication interface 304, a cloud computing hardware and OS 306, a cloud computing platform 308, a validator selection module 205 and a database 310. The cloud communication interface 304 enables communication between the cloud computing platform 308, and one or more entities such as stakeholder nodes 102A-N over a network 312.

The cloud computing hardware and OS 306 may include one or more servers on which an operating system (OS) is installed and includes one or more processing units, one or more storage devices for storing data, and other peripherals required for providing cloud computing functionality. The cloud computing platform 308 is a platform which implements functionalities such as data storage, data analysis, data visualization, data communication on the cloud hardware and OS 306 via APIs and algorithms; and delivers the aforementioned cloud services using cloud-based applications. The cloud computing platform 308 employs the validator selection module 205 for processing a transaction in a blockchain network in a fair and transparent manner. The cloud computing platform 308 also includes the database 310 for storing information pertaining to stakeholder nodes 102A-N such as number of tokens held by a particular stakeholder node, information pertaining to a transaction and so forth.

In accordance with the foregoing embodiments, the cloud computing device 302 may enable stakeholder nodes 102A-N to receive a request to process the transaction in the blockchain network 100 based on an event associated with the blockchain network 100, allocate one or more tokens belonging to one or more stakeholders nodes 102A-N across a set of intervals in such a manner that the total number of tokens in the blockchain network 100 are distributed across the set of intervals, determine a set of stakeholders nodes 102AN responsible for processing the transaction in the blockchain network 100 based on the tokens allocated to each of the intervals, and send a notification to each of the stakeholder nodes 102A-N responsible for processing the transaction in the blockchain network 100 such that each of the responsible stakeholders 102-N processes the transaction in the blockchain network 100. Each stakeholder node 102A-N may belong to one or more participants in the blockchain network 100. Each of the stakeholder nodes 102A-N may use the cloud computing hardware and OS 106 to perform one or more actions in the blockchain network 100.

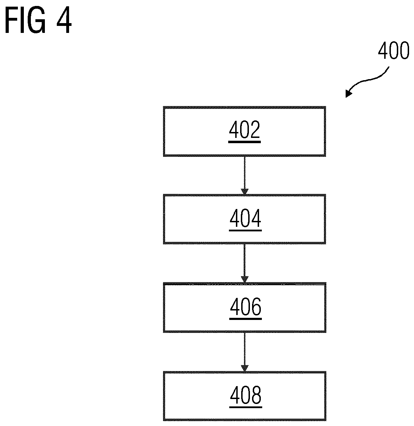

FIG 4 illustrates a process flowchart depicting a method 400 of processing a transaction in a blockchain network 100, according to an embodiment of the present invention. At step 402, a request to process the transaction is received in the blockchain network 100 based on an event associated with the blockchain network 100. In an example, the blockchain network 100 is a permissioned network. The events in the blockchain network 100 may include addition of a new data in the blockchain network, transferring value in a peer-to-peer network, initiating a decision in blockchain network and so forth. In case of a permissioned network, such as an online trading consortium, the events in the blockchain network 100 may include, but are not limited to, transfer of value from one participant to another, transfer of digital information from one participant to another, proposing a new policy in the network, proposing new digital contracts in the network and so forth. Furthermore, based on the event initiated in the blockchain network 100, the request to process the particular transaction is received in the blockchain network 100. Further, in response to processing a request in the blockchain network 100, a transaction is initiated which is to be processed.

At step 404, one or more tokens belonging to one or more stakeholders 102A-N are allocated across a set of intervals in such a manner that the total number of tokens in the blockchain network 100 are distributed across the set of intervals. Each of the intervals comprises at least one token belonging to at least one stakeholder 102A-N. In an example, a total number of stakeholder nodes are determined in the blockchain network 100 and further a total number of tokens are determined that are associated with stakeholder nodes 102A-N in the blockchain network 100.

According to an embodiment, the total number of tokens belonging to one or more stakeholders 102A-N are sorted in a predefined order. The predefined order may be ascending order of the number of tokens or descending order of the number of tokens. In particular, the stakeholder nodes 102A-N having a number of tokens are sorted in a descending order based on the amount of stake of each of the stakeholder nodes 102A-N in the blockchain network 100. Furthermore, subsequent to sorting the stakeholder nodes 102A-N in the predefined order, the set of intervals is generated.

According to an embodiment, the set of intervals are generated based on the total number of tokens in the blockchain network 100. In particular, the determination of the set of intervals is an iterative process dependent on the total number of tokens in the blockchain network 100. Furthermore, each interval in the set of intervals is associated with an interval size. The interval size of each of the intervals determines how many tokens would be allocated to each of the intervals. For example, in order to generate the set of intervals, the total number of tokens are iteratively divided into two portions, namely a first portion and a second portion. Herein, a first portion is a first interval and the second portion is further divided into two portions, namely a third portion and a fourth portion until a minimum threshold value of tokens is obtained. Herein, the third portion is the second interval. The process of division of second portions is repeated until the minimum threshold value of tokens is obtained. It will be appreciated that the interval size of the first portion is a value equal to half the number of tokens in the blockchain network 100. Further, the interval size of the third portion is equal to a value equal to one-fourth of the total number of tokens and so forth until the interval size is reduced to a minimum threshold interval size. As an example, the minimum threshold interval size may be a value equal to a small fraction of the total number of tokens in the blockchain network 100.

Furthermore, subsequent to generating the set of intervals with each of the intervals having a fixed interval size, the one or more tokens belonging to one or more stakeholder nodes 102A-N are allocated across the set of intervals in such a manner that the total number of tokens in the blockchain network 100 are distributed across the set of intervals. It will be appreciated that a summation of the tokens in each of the intervals in the set of intervals is equal to the total number of tokens in the blockchain network 100. According to an embodiment, the one or more tokens belonging to one or more stakeholder nodes 102A-N are allocated across the set of intervals according to the sorted total number of tokens in the blockchain network 100. In an example, the one or more tokens belonging to one or more stakeholder nodes 102A-N are allocated across the set of intervals based on descending order of stakes of the stakeholder nodes 102A-N. In an embodiment, a predefined number of tokens are allocated to each interval in the set of intervals in a sequential order starting with the stakeholder node 102A-N having the highest number of tokens. The predefined number of tokens in each interval is based on the interval size of each interval in the set of intervals. In an example, a number of tokens equal to a first interval size are allocated to a first interval, a number of tokens allocated to a second interval size is allocated to a second interval and so forth. Herein, the number of tokens allocated to the first interval may belong to a stakeholder node 102A-N having the highest number of tokens in the blockchain network 100. Furthermore, the number of tokens allocated to the second interval may belong to a stakeholder node 102A-N having the second highest number of tokens in the blockchain network 100 and so forth. Notably, the tokens held by a stakeholder node may overflow into the next interval depending upon the size of the stake. The method ensures that allocation of tokens to each of the intervals is executed in a sequential order and in descending order of stakes of stakeholder nodes 102A-N across the set of intervals.

At step 406, a set of stakeholder nodes responsible for processing the transaction in the blockchain network 100 is determined based on the tokens allocated to each of the intervals. According to an embodiment, a token is selected from each interval in the set of intervals. The token is selected from each interval is selected in a pseudo random manner. Notably, each of the selected tokens is associated with a stakeholder node 102A-N. Each of the stakeholder nodes 102A-N having the selected token is compounded to form the set of stakeholders responsible for processing the transaction in the blockchain network 100, also referred to as "set of validators" hereinafter.

At step 408, a notification is sent to each of the stakeholder nodes 102A-N responsible for processing the transaction in the blockchain network such that each of the responsible stakeholders 102A-N processes the transaction in the blockchain network 100. The notification may be sent to a communication interface associated with the computing device 200 associated with each of the set of validators to process the transaction in the blockchain network 100.

According to an embodiment, the method comprises determining whether the transaction is successfully processed by the responsible stakeholder nodes 102A-N. Herein, a notification indicating that the transaction is successfully processed is generated, if the transaction is successfully processed by the responsible stakeholder nodes 102A-N. When a transaction is successfully processed, it is determined whether the transaction is valid or invalid. In a case, when the transaction is successfully validated by the responsible stakeholder nodes 102A-N, the associated block is successfully added to the blockchain network 100. In another case, when the transaction is invalidated by the set of responsible stakeholder nodes 102A-N, the associated block is discarded, and the block is not added to the blockchain network 100.

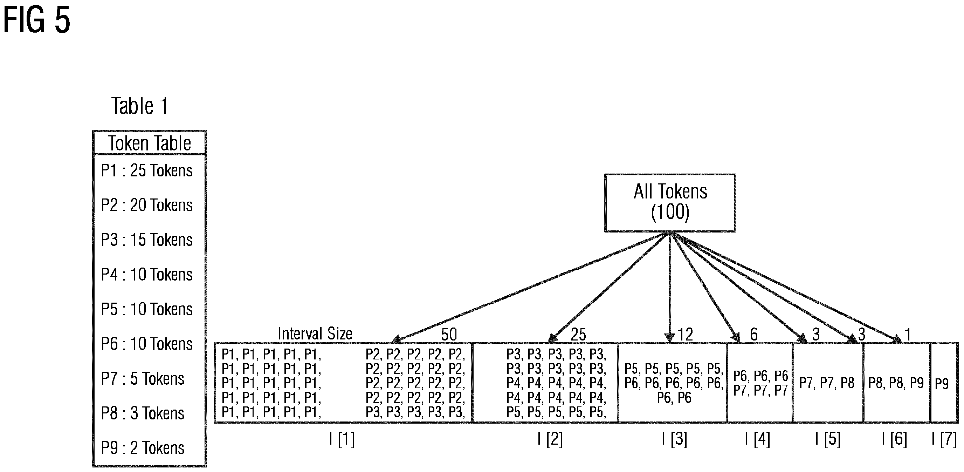

FIG. 5 is block diagram 500 of a diagrammatic representation of exemplary token distribution in the set of intervals, according to an embodiment of the present invention. The token distribution is explained herein by way of example for a blockchain network (T_{N}) (not shown) having 9 stakeholder nodes and a total number of tokens 100 in the blockchain network (T_{N}). As may be seen in Table 1, the stake holder nodes are represented as P1, P2, P3, P4, P5, P6, P7, P7, P8, and P9 and the number of tokens belonging to each of the stakeholder nodes are presented correspondingly. Furthermore, the stakeholder nodes are sorted in the blockchain network (T_{N}) in a decreasing order of tokens belonging to each of the stakeholder nodes P1, P2, P3, P4, P5, P6, P7, P7, P8, and P9. As may be seen in FIG 6, the total number of tokens in the blockchain network (T_{N}) are distributed into '*k*' intervals in descending order of number of tokens belonging to each of the stakeholder nodes P1, P2, P3, P4, P5, P6, P7, P7, P8, and P9. Herein, the set of intervals S(k) is generated based on the total number of tokens (V_{N}), and the interval size of each of the k intervals is determined based on the total number of tokens (V_{N}).

The size for each interval (Interval[i]) is determined based on the total number of tokens (V_{N}) using an iterative process. The total number of tokens (V_{N}) is halved in every iteration and is subsequently updated as the new (V_{N}). The value of (V_{N}) in the i^{th} iteration corresponds to the size of the i^{th} interval (Interval[i]). As shown, in an example, the total number of tokens in the blockchain network (T_{N}) are 100, and therefore the value of (V_{N}) is equal to 100 and this value is halved in each iteration to determine the interval size of each interval. In first iteration V_{N} is halved to obtain the value of i[1] as 50. In second iteration, the value of V_{N} is updated to 50, and is further halved to obtain the value of i[2] as 25. In third iteration, the value of V_{N} is updated to 25, and is further halved to obtain the value of i[3] as 12. In a similar fashion, a value of i[4], i[5], and i[7] are obtained as 6, 3, and 1 respectively. It is to be noted that the tokens are indivisible and therefore treated as whole quantities.

It will be appreciated that the sum of all the interval sizes must be equal to the total number of tokens (V_{N}) in the blockchain network (T_{N}). In the view of ongoing example, the summation of the total number of tokens (V_{N}) amount to 97. Therefore, another interval having an interval size of 3 is added to the set of intervals at an appropriate location according to size of the interval. Herein, the interval i[6] is placed between i[5] and i[7]. In an embodiment, if the sum of all the interval sizes (sum = ∑ VN) is not equal to the total number of tokens present in the blockchain network (T_{N}), then an additional interval (Interval[f]) with size equal to (T_{N} - sum) is added to the set of intervals, at an appropriate location according to its size. It will be appreciated that the size of Interval[f] is less than or equal to 20 (for all values <= 1,000,000,000).

Furthermore, the tokens belonging to the stakeholders nodes P1, P2, P3, P4, P5, P6, P7, P7, P8, and P9 are allocated across the set of intervals S(k) in such a manner that the total number of tokens (V_{N}) in the blockchain network (T_{N}) are distributed across the set of intervals. The tokens held by the stakeholder node having the maximum stake in the blockchain network, followed by the stakeholder nodes with lesser tokens in descending order. Herein, tokens belonging to P1 are allocated to the first interval i[1], and then subsequently tokens belonging to P3, P4, P5, P6, P7, P7, P8, and P9 are placed in a sequential order depending upon the stake of each of the stakeholder nodes. Notably, the tokens held by a stakeholder node may overflow into the next interval depending upon the size of the stake. The k intervals are populated first by the tokens of the stakeholder nodes that have the most stake in the blockchain network and subsequently by other entities that have lesser stake. As may be seen in FIG 1, for the first interval i[1] having an interval size of 50 is populated with 25 tokens belonging to P1, 20 tokens belonging to P2 and 5 tokens belonging to P3. Subsequently, the remaining intervals are also populated in a similar manner. In an embodiment, if multiple stakeholder nodes have the same number of tokens, then a random function dictates the placement of the tokens in the appropriate interval, and thereby resolves conflict. As an example, P4, P5, and P6 hold equal stake in the blockchain network i.e. 10 tokens. In such a case, "random select" function is used to resolve the conflict of token allocation into appropriate intervals. The "random select" function results in a configuration where all the tokens of P4 are placed in the second interval along with half the tokens of P5. The other ties are broken in a similar manner using "random select" function.

Furthermore, a single token is selected from each of the seven intervals. The selection of the tokens from each interval is determined by the pseudo random function such as "token select". Since token selection depends on the stake of the stakeholder node inside the interval, the probability of selection increases with the size of the stake inside the interval. For example, in the first interval, the probability of P1 getting selected to be a part of the validator set is higher than the probabilities of selection of P2 and P3. It will be appreciated that the method is probabilistic and not deterministic. Additionally, it is to be noted that P9 would also be a part of the validator set, since there is only one token present in the seventh interval i[7]. This illustrates that despite having a small share in the overall network, such stakeholder nodes would still get an opportunity to become a part of the validator set. This improves decentralization, since entities with a majority stake may not be able to completely control the network. In an embodiment, to avoid determinism in the last few intervals, the minimum size of an interval created should not be below a minimum interval size threshold value, for example the threshold value may be 3% - 6% of the total blockchain network size.

The advantage of the present invention is that participants of a blockchain network have an increased probability of becoming responsible stakeholders for processing a transaction despite having a small stake in the blockchain network. Another advantage of the present invention is that network latency as observed in existing consensus algorithms is overcome by selecting a set of responsible stakeholders in a fair and transparent manner. Other advantages of the present invention include higher computation efficiency, reduced latency in transactions and higher decentralization promoting increased participation in the network.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope of the invention in its aspects.

### List of reference numbers:

100 Blockchain network
102A-N Stakeholder nodes
104 Network
106A-N Communication interfaces
110A-N Software program
200 Computing device
202 Processing unit
204 Memory unit
205 Validator selection module
206 Bus
208 Input unit
210 Display unit
300 Cloud computing system
302 Cloud computing device
304 Cloud communication interface
306 Cloud computing hardware and OS
308 Cloud computing platform
310 Database
312 Network
400 Method of a processing a transaction in a blockchain network
500 Block diagram of a diagrammatic representation of exemplary token distribution in the set of intervals

## Claims

1. A method of processing a transaction in a blockchain network (100), the method comprising:
receiving a request to process the transaction in the blockchain network (100) based on an event associated with the blockchain network (100);
allocating one or more tokens belonging to one or more stakeholder nodes (102AN) across a set of intervals in such a manner that the total number of tokens in the blockchain network (100) are distributed across the set of intervals, wherein each of the intervals comprises at least one token belonging to at least one stakeholder node (102AN);
determining a set of stakeholder nodes (102A-N) responsible for processing the transaction in the blockchain network based on the tokens allocated to each of the intervals; and
sending a notification to each of the stakeholder nodes (102A-N) responsible for processing the transaction in the blockchain network such that each of the responsible stakeholder nodes (102A-N) processes the transaction in the blockchain network (100).

2. The method according to claim 1, further comprising sorting the total number of tokens belonging to one or more stakeholder nodes (102A-N) in a predefined order.

3. The method according to claim 1 or 2, further comprising generating the set of intervals based on the total number of tokens in the blockchain network (100), and wherein each interval in the set of intervals is associated with an interval size.

4. The method according to any of the claims 1 to 3, wherein allocating one or more tokens belonging to one or more stakeholder nodes (102A-N) across the set of intervals comprises allocating one or more tokens belonging to one or more stakeholder nodes (102A-N) across a set of intervals according to the sorted total number of tokens.

5. The method according to any of the claims 1 to 4, wherein allocating one or more tokens belonging to one or more stakeholder nodes (102A-N) across the set of intervals comprises allocating a predefined number of tokens to each interval in the set of intervals in a sequential order starting with the stakeholder node (102A-N) having the highest number of tokens.

6. The method according to claim 5, wherein the predefined number of tokens in each interval is based on the interval size of each interval in the set of intervals.

7. The method according to any of the claims 1 to 6, wherein the responsible stakeholder nodes (102A-N) are determined by selecting a token from each interval in the set of intervals.

8. The method according to any of the claims 1 to 7, further comprising determining whether the transaction is successfully processed by the responsible stakeholder nodes (102A-N), wherein a notification indicating the transaction is successfully processed is generated, if the transaction is successfully processed by the responsible stakeholder nodes (102A-N).

9. A system for processing a transaction in a blockchain network, the system comprising:
at least one processing unit; and
a memory unit coupled to the at least one processing unit, wherein the memory unit comprises a set of machine readable instructions executable by the at least one processing unit, wherein the set of machine readable instructions cause the processing unit to perform method steps according to any of the claims 1 to 8.

10. A cloud computing system (300) comprising:
a communication interface (302) communicatively coupled to a plurality of stakeholder nodes (102A-N) in the blockchain network (100);
one or more processing units (202) communicatively coupled to the communication interface (302); and
a memory unit (204) communicatively coupled to the one or more processing units (202), wherein the memory unit (204) comprises a set of machine readable instructions executable by the one or more processing units (202), wherein the set of machine readable instructions cause the processing unit to perform method steps according to any of the claims 1 to 8.
